(19) Europäisches Patentamt
European Patent Office
Office européen des brevets

(11) **EP 4 550 686 A1**

(12) **EUROPEAN PATENT APPLICATION**

(43) Date of publication:
07.05.2025 Bulletin 2025/19

(21) Application number: 24208842.5

(22) Date of filing: 25.10.2024

(51) International Patent Classification (IPC):
*H04B 7/06* (2006.01)    *H04L 25/02* (2006.01)

(52) Cooperative Patent Classification (CPC):
**H04B 7/0658; H04L 25/0224; H04L 25/0254**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 06.11.2023 KR 20230151949
11.04.2024 KR 20240048854

(71) Applicant: **Samsung Electronics Co., Ltd.**
**Suwon-si, Gyeonggi-do 16677 (KR)**

(72) Inventors:
• **LEE, Junho**
**16677 Suwon-si (KR)**
• **KIM, Jaein**
**16677 Suwon-si (KR)**
• **CHOI, Yoojin**
**16677 Suwon-si (KR)**

(74) Representative: **Marks & Clerk LLP**
**15 Fetter Lane**
**London EC4A 1BW (GB)**

(54) **METHOD AND DEVICE FOR COMPRESSING CHANNEL STATE INFORMATION**

(57)     A method of operating a wireless communication device includes calculating a first channel matrix for a downlink channel based on a CSI-RS, determining a stage level of a multistage vector quantization process based on an uplink channel, extracting, using a first machine learning model, a latent vector based on the first channel matrix, selecting a first codeword from a first codebook corresponding to a first stage, and generating, in the first stage, a first residual latent vector based on the latent vector, selecting, in a second stage corresponding to the determined stage level, a second codeword from a second codebook corresponding to the second stage, and generating, in the second stage, a second residual latent vector based on the first residual latent vector, wherein the second residual latent vector is based on a second codeword, and generating a bitstream based on the first codeword and the second codeword.

## FIG. 5A

**Description**

FIELD

The present disclosure relates to a method and device for compressing channel state information.

BACKGROUND

In case of a wireless communication system, a base station may transmit a reference signal to a user equipment to obtain channel information between the base station and the user equipment. For example, a base station may transmit a channel state information-reference signal (CSI-RS) for obtaining channel information between the base station and the user equipment. In some cases, the user equipment may identify a channel between the base station and the user equipment using CSI-RS received from the base station. Thus, the user equipment may estimate a channel between the base station and user equipment based on the CSI-RS. Consequently, the user equipment may report feedback information related to the estimated channel to the base station.

However, as the wireless communication systems evolve towards high data rates and increased capacities, the amount of information transmission or exchange between the base station and the user equipment increases significantly leading to a substantial burden on the limited resources available in such systems. Therefore, there is a need in the art for systems and methods that can efficiently compress pieces of information related to channels estimated by UEs.

SUMMARY

The present disclosure provides a method and device for compressing channel state information. Embodiments of the present disclosure may be configured to receive, at a user equipment, a channel state information-reference signal (CSI-RS) from a base station of a wireless communication system. In some cases, the user equipment may include an encoder that may be configured to perform compression of the CSI-RS based on a plurality of compression ratios. According to an embodiment, the encoder and a decoder may be implemented for each of the plurality of compression ratios. In some cases, each of the encoder and the decoder may include a machine learning model.

Additionally, an embodiment of the present disclosure includes a codebook for performing a multi-stage vector quantization process for each of the compression ratios. According to an embodiment, each of the encoder and the decoder may support multi-compression based on implementing a multi-stage vector quantization structure. For example, the user equipment transmits the compressed feedback to the base station using the multi-stage vector quantization process.

According to an aspect of the present disclosure, there is provided a method of operating a wireless communication device, the method including receiving a channel state information-reference signal (CSI-RS) from a base station, calculating a first channel matrix for a downlink channel between the wireless communication device and the base station based on the CSI-RS, determining a stage level of a multi-stage vector quantization process based on an uplink channel between the wireless communication device and the base station, extracting, using a first machine learning model, a latent vector based on the first channel matrix, generating, in a first stage of the multi-stage vector quantization process, a first residual latent vector based on the latent vector, wherein the first residual latent vector is based on a first codeword selected from a first codebook corresponding to the first stage, generating, in a second stage corresponding to the determined stage level of the multi-stage vector quantization process, a second residual latent vector based on the first residual latent vector, wherein the second residual latent vector is based on a second codeword selected from a second codebook corresponding to the second stage, generating a bitstream based on the first codeword and the second codeword, and transmitting the bitstream to the base station using the uplink channel.

According to another aspect of the present disclosure, there is provided a method of operating a system, the method including receiving, by a wireless communication device, a channel state information-reference signal (CSI-RS) from a base station, calculating, by the wireless communication device, a first channel matrix for a downlink channel between the wireless communication device and the base station based on the CSI-RS, determining, by the wireless communication device, a stage level of a multi-stage vector quantization process based on an uplink channel between the wireless communication device and the base station, extracting, using a first machine learning model of the wireless communication device, a latent vector based on the first channel matrix, generating, in a first stage of the multi-stage vector quantization process, a first residual latent vector based on the latent vector, wherein the first residual latent vector is based on a first codeword selected from a first codebook corresponding to the first stage, generating, in a second stage corresponding to the determined stage level of the multi-stage vector quantization process, a second residual latent vector based on a second codeword selected from a second codebook corresponding to the second stage, generating, by the wireless communication device, a bitstream based on the first codeword and the second codeword, transmitting, by the wireless communication device, the bitstream to the base station using the uplink channel, receiving, by the base station, the bitstream, generating, by the base station, the first codeword and the second codeword based on the bitstream, and estimating, by the base station, a second channel matrix for the downlink channel from the first codeword and the second codeword based on a second machine learning model.

According to another aspect of the present disclosure, there is provided a wireless communication device including a radio frequency integrated circuit (RFIC) and at least one processor. The at least one processor is configured to receive a channel state information-reference signal (CSI-RS) from a base station via the RFIC, calculate a first channel matrix for a downlink channel between the wireless communication device and the base station based on the CSI-RS, determine a stage level of a multi-stage vector quantization process based on an uplink channel between the wireless communication device and the base station, extract, using a first machine learning model, a latent vector based on the first channel matrix, generate, in a first stage of the multi-stage vector quantization process, a first residual latent vector based on the latent vector, wherein the first residual latent vector is based on a first codeword selected from a first codebook corresponding to the first stage, generate, in a second stage corresponding to the determined stage level of the multi-stage vector quantization process, a second residual latent vector based on the first residual latent vector, wherein the second residual latent vector is based on a second codeword selected from a second codebook corresponding to the second stage, generate a bitstream based on the first codeword and the second codeword, and transmit the bitstream to the base station via the RFIC.

According to another aspect of the present disclosure, there is provided a channel feedback method of a wireless communication device including receiving a channel state information-reference signal (CSI-RS) from a base station; generating channel state information based on the CSI-RS; generating a latent vector based on the channel state information; determining a number of stages for a multi-stage vector quantization process based on a feedback channel of the base station, wherein the number of stages corresponds to a compression ratio for the channel state information; performing the multi-stage vector quantization process on the latent vector using the determined number of stages to obtain a quantized latent vector; and transmitting a quantized latent vector to the base station using the feedback channel.

The wireless communication device may comprise a user equipment. The wireless communication system may comprise a user equipment and a base station. The first residual latent vector may be based on the latent vector and the first codeword. The second residual latent vector may be based on the first residual latent vector and the second codeword. The described methods may comprise generating, in a first stage of the multi-stage vector quantization process, a first residual latent vector based on the latent vector and a first codeword selected from a first codebook corresponding to the first stage. The described methods may comprise generating, in a second stage corresponding to the determined stage level of the multi-stage vector quantization process, a second residual latent vector based on a first residual latent vector and a second codeword selected from a second codebook corresponding to the second stage.

At least some of the above and other features of the disclosure are set out in the claims.

BRIEF DESCRIPTION OF THE DRAWINGS

Embodiments will be more clearly understood from the following detailed description taken in conjunction with the accompanying drawings in which:

FIG. 1 illustrates an operation of transmission and reception of signals between a base station and a user equipment (UE), according to an embodiment;
FIG. 2 illustrates a wireless communication device, according to an embodiment;
FIG. 3 illustrates a wireless communication device, according to an embodiment;
FIG. 4 illustrates a wireless communication device, according to an embodiment;
FIG. 5A illustrates signal transmission and reception between an encoder and a decoder, according to an embodiment;
FIG. 5B illustrates a multi-stage vector quantization process of an encoder, according to an embodiment;
FIGS. 6A and 6B each illustrate sequential training of wireless communication devices, according to an embodiment;
FIG. 7 illustrates sequential training of wireless communication devices, according to an embodiment;
FIG. 8 illustrates a method of operating a wireless communication device, according to an embodiment;
FIG. 9 illustrates a method of operating a UE, according to an embodiment;
FIG. 10 illustrates a method of operating a wireless communication system including a UE and a base station, according to an embodiment;
FIG. 11 illustrates a method of operating a wireless communication device, according to an embodiment;
FIG. 12 illustrates a block diagram of a UE, according to an embodiment; and
FIG. 13 is a block diagram illustrating an electronic device, according to an embodiment.

DETAILED DESCRIPTION OF THE EMBODIMENTS

In the case of a modern wireless communication system, the transmission of a Channel State Information reference signal (CSI-RS) is important for optimizing the performance and efficiency of the communication link, e.g., a communication link between a user equipment and a base station. In some examples, CSI-RS provides detailed information about the state of the communication channel, enabling the user equipment to adjust parameters for maximizing data throughput, minimizing errors, and enhancing overall system performance. In some examples, the user equipment may report feedback information related to the estimated channels to the base station. For example, the feedback information may include a precoding matrix indicator (PMI), a rank indicator (RI), and a channel quality indicator (CQI).

Existing systems for compressing CSI-RS and/or CSI-RS feedback may be implemented based on reducing the amount of data required to represent the CSI-RS. In some cases, these systems may perform quantization, dimensionality reduction, and leveraging the inherent sparsity of the channel matrix which may result in significant degradation of the quality of the CSI-RS. For example, a user equipment of an existing system may compress the feedback by selecting an encoder according to a payload of the CSI feedback.

Moreover, in some examples, each encoder of the plurality of encoders may respectively include different compression ratios. As a result, such systems may result in a trade-off between compression efficiency and the accuracy of the reconstructed channel information. In some cases, such methods may lead to a loss of critical channel details, which may degrade the performance of the communication system.

By contrast, the present disclosure provides a method and device for compressing channel state information. Embodiments of the present disclosure may be configured to receive, at a user equipment, a channel state information-reference signal (CSI-RS) from a base station of a wireless communication system. In some cases, the user equipment may include an encoder that may be configured to perform compression of the CSI-RS and/or CSI-RS feedback based on a plurality of compression ratios. According to an embodiment, the encoder and a decoder may be implemented for each of the plurality of compression ratios. In some cases, each of the encoder and the decoder may include a machine learning model.

Additionally, an embodiment of the present disclosure includes a codebook for performing a multi-stage vector quantization process for each of the compression ratios. According to an embodiment, each of the encoder and the decoder may support multi-compression based on implementing a multi-stage vector quantization process. For example, the user equipment transmits the compressed feedback to the base station based on implementing the multi-stage vector quantization process.

Embodiments of the present disclosure are configured to perform a compression of a CSI-RS. In some cases, the CSI-RS may be received by a user equipment from a base station. According to an embodiment, the user equipment may estimate a downlink channel based on the CSI-RS and may efficiently compress the CSI-RS using a machine learning model. Subsequently, the user equipment transmits a feedback to the base station using a multi-stage vector quantization process.

In some cases, the user equipment may select a stage of the multi-stage vector quantization method based on at least a bandwidth and a capacity of the channel. According to an embodiment, the user equipment may generate a residual latent vector at each stage of a plurality of stages based on selecting a codeword from a codebook. In some cases, the residual latent vector of a current stage may be computed based on the residual latent vector of a previous stage and the residual latent vector of the current stage may be transferred to the next stage for computation of a subsequent residual latent vector. For example, the residual latent vector may be a difference between the residual latent vector of a previous stage and the codeword selected based on the residual latent vector of the previous stage. In some examples, each of the selected codewords may be combined to generate a bitstream for transmission to another wireless communication device.

According to an embodiment, the user equipment may receive a CSI-RS from a base station. In some cases, the user equipment may include an encoder configured to generate a continuous latent vector. For example, the encoder comprises a machine learning model that enables transmission of the latent vector extracted from the CSI-RS to a quantizer. In some cases, the quantizer performs the multi-stage vector quantization for each stage and generates the bitstream that includes the quantized channel information for transmission to the base station. In some cases, a de-quantizer of the base station may receive the bitstream and may be configured to generate codewords based on an index information of the codewords in the bitstream. Subsequently, a decoder of the base station may provide a channel information using the codewords or the quantized latent vector using a machine learning model.

The present disclosure describes systems and methods for operating a wireless communication device. Embodiments of the present disclosure may be configured to receive a channel state information-reference signal (CSI-RS) from a base station and calculate a first channel matrix for a downlink channel between the wireless communication device and the base station based on the CSI-RS. In some cases, a stage level of a multi-stage vector quantization process is determined based on an uplink channel between the wireless communication device and the base station. A first machine learning model is used to extract a latent vector based on the first channel matrix. Subsequently, a second residual latent vector is generated based on the first residual latent vector in a second stage corresponding to the determined stage level of the multi-stage vector quantization process. In some cases, the second residual latent vector is based on a second codeword selected from a second codebook corresponding to the second stage. A bitstream that is generated based on the first and second codewords may be transmitted to the base station.

Accordingly, by generating the latent vector based on the machine learning model of the encoder, embodiments of the present disclosure are able to achieve an efficient use of the available bandwidth in wireless communication systems. Additionally, by implementing the encoder, the decoder, and the codebook that may be used for each of the compression ratios, i.e., a single encoder, decoder and codebook which may be employed across a range of desired compression ratios, embodiments are able to prevent selection of different encoders for different compression ratios resulting in an improved use of bandwidth and capacity of the channel. The machine learning model may be trained using a sequential training method which results in transfer learning and application of useful prior knowledge (i.e., information generated based on a previous stage) to the training process.

As described herein, a base station is an entity communicating with a wireless communication device and allocating a network resource to the wireless communication device and may include at least one of a cell, a NodeB (NB), an eNodeB, a next-generation radio access network (NG RAN), a wireless connection unit, a base station controller, a node on a network, and a gnodeB (gNB).

A wireless communication device is an entity communicating with a base station or another wireless communication device and may include at least one of a node, a user equipment (UE), a next-generation UE (NG UE), a mobile station (MS), a mobile equipment (ME), a device, and a terminal.

Additionally, the wireless communication device may include at least one of a smartphone, a tablet personal computer (PC), a mobile phone, a video phone, an electronic book (ebook) reader, a desktop PC, a laptop PC, a netbook computer, a personal digital assistant (PDA), a portable multimedia player (PMP), an MP3 player, a medical device, a camera, and a wearable device. Additionally, the wireless communication device may include at least one of a television, a digital video disk (DVD) player, an audio system, a refrigerator, an air conditioner, a vacuum cleaner, an oven, a microwave oven, a washing machine, an air purifier, a set-top box, a home automation control panel, a security control panel, a media box (for example, Samsung HomeSync™, Apple TV™, or Google TV™), a game console (for example, Xbox™, or PlayStation™), an electronic dictionary, an electronic key, a camcorder, and an electronic picture frame. Additionally, the wireless communication device may include at least one of various medical devices (for example, various portable medical measuring devices (blood sugar meters, heart rate monitors, blood pressure meters, medical thermometers, and the like), magnetic resonance angiography (MRA) machines, magnetic resonance imaging (MRI) machines, computed tomography (CT) scanners, ultrasonic instruments, and the like), navigation systems, global navigation satellite systems (GNSSs), event data recorders (EDRs), flight data recorders (FDRs), automotive infotainment devices, vessel electronic equipment (for example, vessel navigation systems, gyrocompasses, and the like), avionics, security devices, automotive head units, industrial or home robots, drones, automated teller machines (ATMs) of financial institutions, point-of-sale (POS) systems, and Internet-of-Things (IoT) devices (for example, light bulbs, various sensors, sprinklers, fire alarms, temperature controllers, street lights, toasters, exercise equipment, hot-water tanks, heaters, boilers, and the like). Furthermore, the wireless communication device may include various multimedia systems capable of performing communication functions.

Hereinafter, embodiments of the present disclosure will be described in detail with reference to the accompanying drawings.

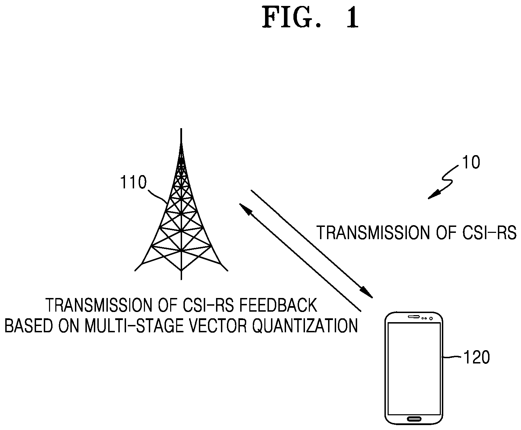

FIG. 1 illustrates an operation of transmission and reception of signals between a base station and a wireless communication device, according to an embodiment.

Referring to FIG. 1, a wireless communication system 10 may include a base station 110 and a UE 120. Although the wireless communication system 10 is shown as including one base station 110 and one UE 120 for convenience of description, this is only an example, and the wireless communication system 10 is not limited thereto and may be implemented to include various numbers of base stations and various numbers of UEs.

The base station 110 may be connected with the UE 120 via a wireless channel and may provide various communication services to the UE 120. The base station 110 may provide, for user traffic, a service via a shared channel and may perform scheduling by collecting state information, such as a buffer state, an available transmission power state, and a channel state, of the UE 120. The wireless communication system 10 may support a beamforming technique by using orthogonal frequency division multiplexing (OFDM) as a wireless access technique. Additionally, the wireless communication system 10 may support an adaptive modulation and coding (AMC) method in which a modulation scheme and a channel coding rate are determined according to the channel state of the UE 120.

Beamforming is a signal processing technique used in antenna arrays to direct signals toward a specific direction, enhancing signal strength and reducing interference. Beamforming works by controlling the phase and amplitude of signals sent from or received by an array of antennas. During transmission, the signals from each antenna are adjusted such that they constructively interfere in a specific direction, forming a focused beam of energy. The concentrated beam can be steered by changing the phase shifts, providing for the signal to be directed toward a particular target or receiver.

During reception, beamforming enhances signals from a specific direction while reducing noise and interference from other directions. By aligning the phases of incoming signals from the desired direction, the system amplifies the signal while minimizing rest of the signals. Beamforming technique is used in applications such as wireless communication (e.g., Wi-Fi, 5G), radar, and sonar, where it improves signal strength, clarity, and range by efficiently focusing energy in the desired direction.

OFDM is a digital communication technique that divides a signal into multiple closely spaced subcarriers, each transmitting a part of the data simultaneously. The subcarriers are orthogonal which indicates that the subcarriers do not interfere with each other, despite being close in frequency which provides for efficient use of bandwidth and high data rates. OFDM is robust against signal fading and interference, making OFDM ideal for wireless communication systems like Wi-Fi, 4G, and 5G. Additionally, OFDM simplifies equalization by converting a wideband frequency-selective channel into multiple flat narrowband channels.

AMC is used in wireless communication systems to optimize data transmission rates and reliability by dynamically adjusting the modulation scheme and error-correcting codes based on the current channel conditions. In some cases, AMC uses high-order modulation (e.g., 64-Quadrature Amplitude Modulation (64-QAM)) and less redundant coding, maximizing data rates. In some cases, AMC switches to low-order modulation (e.g., Quadrature Phase Shift Keying (QPSK)) and strong coding, which reduces data rates and improves error resilience. AMC works by continuously monitoring the signal quality, such as the Signal-to-Noise Ratio (SNR). Based on the feedback, the system selects the most suitable combination of modulation and coding that balances throughput and reliability. The adaptability ensures efficient use of the available bandwidth, improves overall network performance, and enhances user experience by maintaining a stable connection even in fluctuating channel conditions. For example, AMC is used in modern wireless standards like LTE, Wi-Fi, and 5G.

Referring again to FIG. 1, for example, the wireless communication system 10 may transmit and receive signals using a broad frequency band in a 6 GHz or higher frequency band. For example, the wireless communication system 10 may increase a data transfer rate using a millimeter-wave band, such as the 28 GHz band or the 60 GHz band. As described herein, the wireless communication system 10 may support transmission and reception based on a directional beam generated using multiple antennas to secure coverage since the millimeter-wave band has a relatively large magnitude of signal attenuation per distance. The wireless communication system 10 may be a system supporting multiple-input multiple-output (MIMO). Thus, the base station 110 and the UE 120 may support a beamforming technique. The beamforming technique may be divided into digital beamforming, analog beamforming, hybrid beamforming, etc.

Referring to FIG. 1, the base station 110 may transmit a channel state information-reference signal (CSI-RS) to the UE 120. The UE 120 may estimate a downlink channel using the CSI-RS. The UE 120 may efficiently compress channel state information between the UE 120 and the base station 110 based on a machine learning model, and may transmit the compressed channel state information to the base station 110. For example, the UE 120 may transmit, to the base station 110, CSI-RS feedback based on multi-stage vector quantization.

According to an embodiment, the artificial intelligence model is a machine learning model or an Artificial neural network (ANN). An ANN can be a hardware component or a software component that includes connected nodes (i.e., artificial neurons) that loosely correspond to the neurons in a human brain. Each connection, or edge, transmits a signal from one node to another (like the physical synapses in a brain). When a node receives a signal, it processes the signal and then transmits the processed signal to other connected nodes.

ANNs have numerous parameters, including weights and biases associated with each neuron in the network, which control the degree of connection between neurons and influence the neural network's ability to capture complex patterns in data. These parameters, also known as model parameters or model weights, are variables that determine the behavior and characteristics of a machine learning model.

In some cases, the signals between nodes comprise real numbers, and the output of each node is computed by a function of its inputs. For example, nodes may determine their output using other mathematical algorithms, such as selecting the max from the inputs as the output, or any other suitable algorithm for activating the node. Each node and edge are associated with one or more node weights that determine how the signal is processed and transmitted. In some cases, nodes have a threshold below which a signal is not transmitted at all. In some examples, the nodes are aggregated into layers.

The parameters of machine learning model can be organized into layers. Different layers perform different transformations on their inputs. The initial layer is known as the input layer and the last layer is known as the output layer. In some cases, signals traverse certain layers multiple times. A hidden (or intermediate) layer includes hidden nodes and is located between an input layer and an output layer. Hidden layers perform nonlinear transformations of inputs entered into the network. Each hidden layer is trained to produce a defined output that contributes to a joint output of the output layer of the ANN. Hidden representations are machine-readable data representations of an input that are learned from hidden layers of the ANN and are produced by the output layer. As the understanding of the ANN of the input improves as the ANN is trained, the hidden representation is progressively differentiated from earlier iterations.

In some cases, the machine learning model may be trained for optimizing performance. For example, parameters of the machine learning model can be learned or estimated from training data and then used to make predictions or perform tasks based on learned patterns and relationships in the data. In some examples, the parameters are adjusted during the training process to minimize a loss function or maximize a performance metric. The goal of the training process may be to find optimal values for the parameters that allow the machine learning model to make accurate predictions or perform well on the given task.

Accordingly, the node weights can be adjusted to improve the accuracy of the output (i.e., by minimizing a loss which corresponds in some way to the difference between the current result and the target result). The weight of an edge increases or decreases the strength of the signal transmitted between nodes. For example, during the training process, an algorithm adjusts machine learning parameters to minimize an error or loss between predicted outputs and actual targets according to optimization techniques like gradient descent, stochastic gradient descent, or other optimization algorithms. Once the machine learning parameters are learned from the training data, the machine learning model can be used to make predictions on new, unseen data (i.e., during inference).

According to an embodiment, UE 120 may receive a CSI-RS from the base station 110. The UE 120 may calculate a first channel matrix for a downlink channel between the UE 120 and the base station 110 using the CSI-RS. The UE 120 may determine a stage level s (where s is a positive integer) of multi-stage vector quantization for a latent vector, based on an uplink channel between the UE 120 and the base station, e.g., at least one of a bandwidth, a capacity, and a resource of an uplink channel between the UE 120 and the base station 110. According to an embodiment, the stage level s of multi-stage vector quantization may increase as at least one of the bandwidth, the capacity, and the resource of the uplink channel increases. The UE 120 may extract the latent vector from the first channel matrix based on a first machine learning model.

As a first stage, the UE 120 may select at least one first codeword from a first codebook based on the latent vector and may generate a first residual latent vector. In the sequential second stage, the UE 120 may select at least one second codeword from a second codebook, based on a first residual latent vector input from a previous stage. The UE 120 may generate a second residual latent vector to be transferred to a next stage. The process repeats for each stage till an s-th stage, that is, a plurality of residual latent vectors corresponding to a plurality of sequential stages from the first stage to the s-th stage are iteratively computed. In some cases, the first codebook may be identical to the second codebook.

According to an embodiment, the UE 120 may partition the latent vector into a plurality of sub-latent vectors. In some cases, the UE 120 may perform the generation of the first residual latent vector and the generation of the second residual latent vector on a sub-latent vector basis. For example, the UE 120 may perform the generation of the first residual latent vector and the generation of the second residual latent vector performed in units of the sub-latent vectors. The UE 120 may generate a bitstream including index information for the at least one first codeword and the at least one second codeword. According to an embodiment, the UE 120 may generate the bitstream by concatenating a first bitstream for the at least one first codeword and at least one second bitstream for the at least one second codeword. The UE 120 may determine a size of the bitstream based on at least one of a bandwidth, a capacity, and a resource of the uplink channel. According to an embodiment, as at least one of the bandwidth, the capacity, and the resource of the uplink channel increases, the size of the bitstream may increase. The UE 120 may transmit the bitstream to the base station 110.

Additionally, the base station 110 may receive the bitstream from the UE 120. The base station 110 may generate the at least one first codeword and the at least one second codeword based on the index information in the bit stream. The base station 110 may estimate a second channel matrix for the downlink channel from the at least one first codeword and the at least one second codeword, based on a second machine learning model. The first machine learning model and the second machine learning model may refer to the same learning model. In some cases, the first machine learning model and the second machine learning model may include an encoder and a decoder of a combined machine learning model, respectively.

The UE 120 may train a first machine learning model and the base station 110 may train a second machine learning model. For example, the first machine learning model and the second machine learning model may be trained according to a repetition of the first stage to the s-th stage. As the training progresses, the difference between the first channel matrix and the second channel matrix may decrease and the difference between the latent vector and a quantized latent vector that is based on the at least one first codeword and the at least one second codeword may decrease. Additionally, a parameter of the first machine learning model may be updated, a parameter of the second machine learning model may be updated, and the first codebook and the second codebook may be updated. In some cases, the first machine learning model and the second machine learning model are trained by computing a loss function. A parameter of the first machine learning model, a parameter of the second machine learning model, the first codebook, and the second codebook are updated based on the loss function. According to an embodiment, the UE 120 may perform training in the first stage followed by performing in the second stage. In some cases, the first machine learning model and the second machine learning model are trained by performing sequential training in a plurality of training phases corresponding to a plurality of training stages of the multi-stage vector quantization process. In some cases, the first machine learning model and the second machine learning model are performed first training corresponding to the first stage, and the first machine learning model and the second machine learning model are performed second training corresponding to the second stage based on a result of the first training. The first machine learning model and the second machine learning model may be trained in the first stage. Additionally, the first machine learning model and the second machine learning model may be performed second training in the first stage and the second stage based on a result of first training.

The UE 120 may transmit channel state information feedback to the base station 110 in accordance with a small amount of uplink resources. That is, the UE 120 may adjust the size of the bitstream for the CSI-RS feedback according to the CSI-RS feedback payload when a CSI-RS feedback payload dynamically changes. Additionally, the UE 120 may adjust the size of the bitstream according to various CSI-RS feedback payloads using an autoencoder (AE) (e.g., a single AE).

The UE 120 may efficiently compress the channel state information based on the first machine learning model. The UE 120 may adjust the number of bits of the bitstream using a single encoder. The UE 120 may compress the channel state information by taking into account non-linear characteristics.

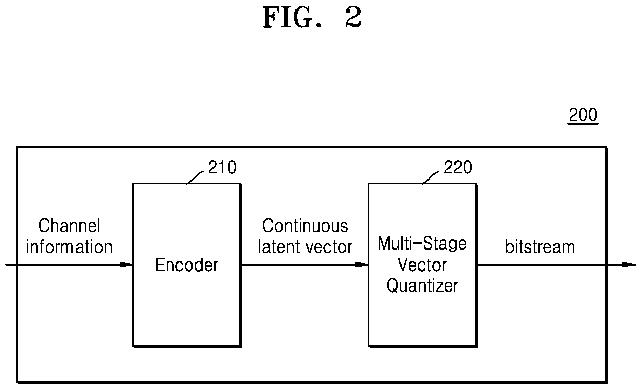

FIG. 2 illustrates a wireless communication device according to an embodiment.

FIG. 2 may be described with reference to FIG. 1. Referring to FIG. 2, a wireless communication device 200 may include an encoder 210 and a multi-stage vector quantizer 220. The encoder 210 and the multi-stage vector quantizer 220 may be implemented by software and may be loaded in memory. However, the inventive concept is not limited thereto, and in some embodiments, the encoder 210 and the multi-stage vector quantizer 220 may be implemented by hardware and may be arranged outside the memory. The multi-stage vector quantizer 220 may form a portion of the encoder 210.

The wireless communication device 200 may receive a reference signal from another wireless communication device. For example, the wireless communication device 200 may receive a CSI-RS from the base station 110. The wireless communication device 200 may estimate a downlink channel based on the CSI-RS. The wireless communication device 200 may transfer the received channel information, e.g., the estimated downlink channel or the CSI-RS received from the base station 110, for the downlink channel to the encoder 210. For example, the channel information may include a channel matrix for the downlink channel. The encoder 210 may extract a continuous latent vector from the channel information, e.g., the channel matrix. For example, the encoder 210 may include a first machine learning model. The first machine learning model may extract a continuous latent vector from the channel information. The first machine learning model may extract a latent vector for the channel information. The first machine learning model may be implemented by software and may be loaded in the encoder 210. However, the inventive concept is not limited thereto, and according to an embodiment, the first machine learning model may be implemented by hardware and may be arranged outside the encoder 210. The first machine learning model may include at least one of a convolutional neural network (CNN), a recurrent neural network (RNN), and a deep neural network (DNN). The first machine learning model may include various neural networks and is not limited to the examples set forth above.

A convolutional neural network (CNN) is a class of neural network that is commonly used in computer vision or image classification systems. In some cases, a CNN may enable processing of digital images with minimal pre-processing. A CNN may be characterized by the use of convolutional (or cross-correlational) hidden layers. The convolutional layers apply a convolution operation to the input before signaling the result to the next layer. Each convolutional node may process data for a limited field of input (i.e., the receptive field). During a forward pass of the CNN, filters at each layer may be convolved across the input volume, computing the dot product between the filter and the input. During the training process, the filters may be modified so that they activate when they detect a particular feature within the input.

RNN is a type of artificial neural network designed to process sequential data by maintaining a memory of previous inputs. RNNs have loops that provide for information to persist across time steps, enabling them to capture temporal dependencies in data. In case of an RNN, each neuron receives input from the current time step and its own output from the previous time step. The structure provides for RNNs to generate predictions based on both the current input and the historical context provided by past inputs. RNNs are effective for tasks involving sequential data, such as language modeling, speech recognition, and time series forecasting.

A DNN is an artificial neural network with multiple layers of neurons between the input and output layers. The intermediate layers, known as hidden layers, provides for the network to learn and model complex patterns in data by gradually abstracting features at different levels of representation. Each layer in a DNN comprises interconnected neurons, where each neuron applies a weighted sum of the inputs followed by a non-linear activation function. The deep architecture of a DNN enables capturing of intricate relationships in data that shallow networks cannot, making DNNs highly effective for tasks such as image recognition, natural language processing, and speech recognition. Training a DNN includes adjusting the weights of the neurons using backpropagation which minimizes the error between the predicted and actual outputs by propagating the error gradients through the layers. The deep structure provides for DNNs to achieve high accuracy and performance on complex tasks, making DNNs a foundational tool in modern machine learning and artificial intelligence.

Referring to FIG. 2, the multi-stage vector quantizer 220 may compress the channel information by performing multi-stage vector quantization on the continuous latent vector. That is, the multi-stage vector quantizer 220 may perform the multi-stage vector quantization stage-by-stage (i.e., through a plurality of stages). The multi-stage vector quantizer 220 may output a bitstream including the quantized channel information. The multi-stage vector quantizer 220 may adjust the number of bits of the bitstream by adjusting the number of stages. For example, the multi-stage vector quantizer 220 may increase the number of bits in the bitstream by increasing the number of stages.

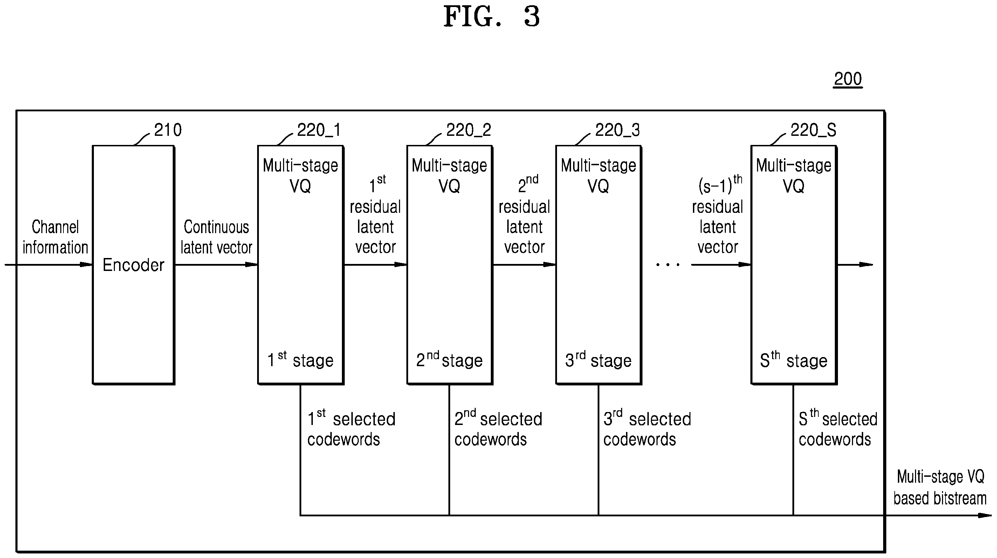

FIG. 3 illustrates a wireless communication device according to an embodiment.

A wireless communication device 200 of FIG. 3 represents a specific example of the wireless communication device 200 of FIG. 2. Additionally, FIG.3 may be described with reference to FIG. 2 and repeated descriptions may be omitted. Referring to FIG. 3, the wireless communication device 200 may include an encoder 210 and multi-stage vector quantizers 220_1, 220_2, 220_3, ..., and 220_s. The quantizers 220_1, 220_2, 220_3, ..., and 220_s may each represent individual stages of a single multi-stage vector quantizer, e.g., quantizer 220.

The multi-stage vector quantizers 220_1, 220_2, 220_3, ..., and 220_s may perform vector quantization(VQ) sequentially in the respective stages from a first stage to an s-th stage, respectively.

The multi-stage vector quantizer 220_1 may perform vector quantization at the first stage. The multi-stage vector quantizer 220_1 may select at least one first codeword from a codebook based on a latent vector and may generate a first residual latent vector. For example, the multi-stage vector quantizer 220_1 may select at least one first codeword similar to the latent vector and may output the difference between the latent vector and the at least one first codeword as the first residual latent vector.

Additionally, the multi-stage vector quantizer 220_2 may perform vector quantization at the second stage. The multi-stage vector quantizer 220_2 may select at least one second codeword from the codebook based on the first residual latent vector and may generate a second residual latent vector. For example, the multi-stage vector quantizer 220_2 may select at least one second codeword similar to the first residual latent vector and may output the difference between the first residual latent vector and the at least one second codeword as the second residual latent vector.

Additionally, the multi-stage vector quantizer 220_s may perform vector quantization at the s-th stage. The multi-stage vector quantizer 220_s may select at least one s-th codeword from the codebook based on a (s-1)-th residual latent vector and may generate an s-th residual latent vector. For example, the the multi-stage vector quantizer 220_s may select at least one s-th codeword similar to the (s-1)-th residual latent vector and may output the difference between the (s-1)-th residual latent vector and the at least one s-th codeword based on the selected s-th codeword as the s-th residual latent vector.

The wireless communication device 200 may generate a bitstream based on multi-stage vector quantization by concatenating the selected codewords (i.e., selected first codewords, selected second codewords, selected third codewords, ..., selected s-th codewords). Additionally, the wireless communication device 200 may transmit the bitstream to another wireless communication device (e.g., the user equipment 120 may transmit the bitstream to the base station 110 as described in FIG. 1).

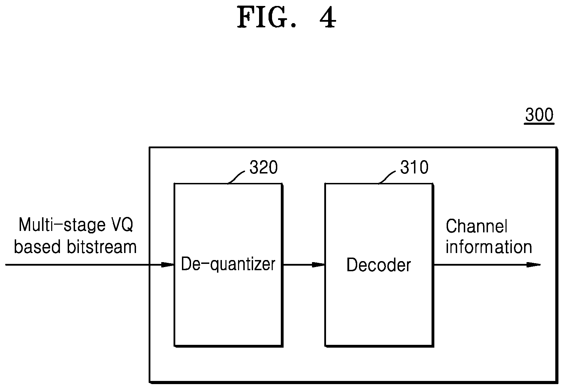

FIG. 4 illustrates a wireless communication device according to an embodiment.

FIG. 4 may be described with reference to FIG. 2. Referring to FIG. 4, a wireless communication device 300 may include a de-quantizer 320 and a decoder 310. The decoder 310 and the de-quantizer 320 may be implemented by software and may be loaded in memory. However, the inventive concept is not limited thereto, and according to some embodiments, the decoder 310 and the de-quantizer 320 may be implemented by hardware and may be arranged outside the memory.

The wireless communication device 300 may receive a bitstream based on multi-stage vector quantization from another wireless communication device (for example, the wireless communication device 200 of FIG. 2).

The wireless communication device 300 may input the received bitstream to the de-quantizer 320. The de-quantizer 320 may estimate a quantized latent vector using index information for codewords in the bitstream. That is, the de-quantizer 320 may output the codewords using the index information for the codewords in the bitstream.

The decoder 310 may estimate channel information from the codewords (for example, the quantized latent vector). For example, the decoder 310 may include a second machine learning model. The second machine learning model may extract the channel information from the codewords. The second machine learning model may be implemented by software and may be loaded in the decoder 310. However, the inventive concept is not limited thereto, and according to some embodiments, the second machine learning model may be implemented by hardware and may be arranged outside the decoder 310. The second machine learning model may include at least one of a CNN, an RNN, and a DNN. Additionally, the second machine learning model may include various neural networks and is not limited to the examples set forth herein. The first machine learning model of the encoder 210 of FIG. 2 and the second machine learning model of the decoder 310 of FIG. 4 may use the same neural network.

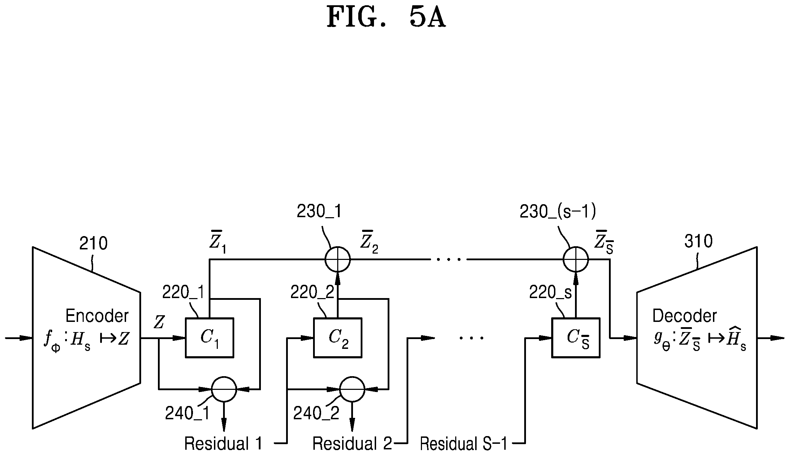

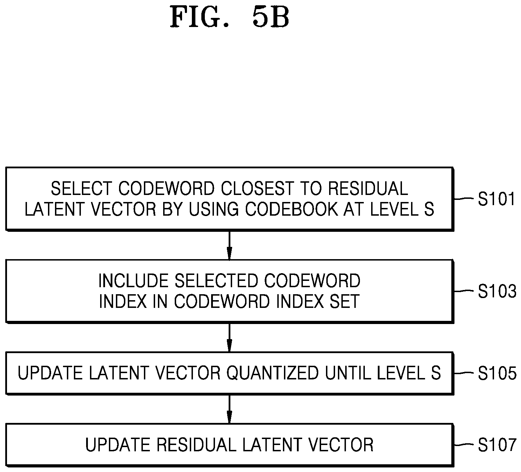

FIG. 5A illustrates signal transmission and reception between an encoder and a decoder, according to an embodiment. FIG. 5B illustrates a multi-stage vector quantization process of an encoder, according to an embodiment.

FIGS. 5A and 5B may be described with reference to FIGS. 3 and 4. Referring to FIG. 5A, a wireless communication system 20 may include an encoder 210, a decoder 310, concatenation units 230_1 to 230_(s-1), quantizers 220_1 to 220_s, and residual units 240_1 to 240_(s-1).

An AE, in which a pair of the encoder 210 and the decoder 310 are parametrized as a DNN, may perform learned data compression. Referring to FIG. 5A, the encoder 210 may output a continuous latent variable vector based on a first machine learning model.

[Expression 1]

$$f_\varphi : H_S \to z$$

The encoder 210 may be parametrized as $\varphi$. Here, H refers to a channel matrix, z refers to a continuous latent vector, and s refers to a multi-stage vector quantization level (or a stage level of the multi-stage vector quantization process).

The quantizer 220_1 at a first stage may be based on a sub-codebook $C_1$. A codebook may be a set of sub-codebooks. For example, the codebook may be represented by a set of sub-codebooks, such as $C = C_1 \cup C_2 \cup \cdots \cup C_S$. $K/K_{sub} = S$, $K_{sub}$ may be a divisor of K, and $C_s$ may be an s-th sub-codebook.

The continuous latent vector z may be partitioned into $p$ pieces of sub-vectors. Each sub-vector may be approximated in the form of an additive combination of a plurality of codewords, as shown in Equation 1.

[Equation 1]

$$\mathbf{z}_p \approx \sum_{j \in \mathcal{J}_p, |\mathcal{J}_p| = S} \mathbf{c}_{p,j} = \mathbf{C}_p \mathbf{x}_p,$$

$p$ refers to indices of the partitioned sub-vectors. $\mathcal{J}_p$ refers to a set of stage indices. j is an index for a vector quantization level s. $\mathcal{J}_p$ may be implemented by one-hot encoding. $C_p$ is a cumulative codebook. $x_p$ includes 1 as an element to provide for elements of $C_p$ as output. $c_{p,j}$ denotes the M × 1 codeword vector in the M × K codebook matrix $C_p$, $x_p \in \{0, 1\}^K$ denotes the S-sparse binary vector, and the support set of $x_p$ is given as $\mathcal{J}_p$.

The wireless communication device 200 may determine a maximum level s of multi-stage vector quantization according to at least one of a bandwidth, a capacity, and a resource of a feedback link (for example, an uplink). The wireless communication device 200 may determine the maximum level s of the multi-stage vector quantization according to at least one of the bandwidth, the capacity, and the resource of the feedback link that may be represented using Inequality 1. In case of a UE, when there is a feedback rate constraint of B-bits, the vector quantization level $\bar{s} \le S$ may be determined based on the total number of bits for representing codewords selected for each of P segments until a stage $\bar{s}$.

[Inequality 1]

$$R_{\bar{s}} = P \bar{s} \log_2 K_{\text{sub}} \le B$$

Here $K/K_{sub} = S$, $K_{sub}$ may be a divisor of K, and $C_s$ may be an s-th sub-codebook. $R_{\bar{s}}$ refers to a feedback rate. B refers to a maximum bitrate of the feedback link.

The vector quantization level $\bar{s}$ may be determined by Equation 2.

[Equation 2]

$$\bar{s} = \left\lfloor \frac{B}{P \lceil \log_2 K_{\text{sub}} \rceil} \right\rfloor$$

The multi-stage vector quantization is performed until stage $\bar{s}$ to discretize a latent vector as $z = f_\phi(H)$.

A process, in which the multi-stage vector quantizers 220_1 to 220_s perform the multi-stage vector quantization from multi-stage vector quantization level s=1 to multi-stage vector quantization level s=$\bar{s}$, may be represented as described herein.

In some cases, the discretely represented z may be expressed based on the L2-norm distance. As described herein, z may be represented using Equation 3.

[Equation 3]

$$Q_{\mathcal{C}}(\mathbf{z}) = \arg\min_{\mathbf{q} \in \mathcal{C}} \|\mathbf{z} - \mathbf{q}\|_2^2$$

$Q_C(z)$ refers to a latent vector quantized based on the codebook C. $q$ refers to a codeword that is included in the codebook C.

An S-term approximation may be represented using Equations 4 and 5.

[Equation 4]

$$Q_{\mathcal{C}}^S(\mathbf{z}) = \sum_{s=1}^{S} \hat{\mathbf{q}}_s$$

[Equation 5]

$$Q_{\mathcal{C}}^S(\mathbf{z}) \triangleq \{\hat{\mathbf{q}}_s, 1 \leq s \leq S\}$$

$$= \arg\min_{\mathbf{q}_s \in \mathcal{C}, 1 \leq s \leq S} \|\mathbf{z} - \sum_{s=1}^{S} \mathbf{q}_s\|_2^2$$

The best *S*-term approximation may be considered as the generalization of a vector quantization target.

Referring to FIG. 5B, in operation S101, the multi-stage vector quantizers 220_1 to 220_s may each select a codeword closest to a residual latent vector using a codebook of a level s. As described herein, the residual latent vector may be referred to as a residual. The method of selecting the codeword that may be closest to the residual latent vector using the codebook of the level s may be represented using Equation 6.

[Equation 6]

$$i_p[s] = \arg\min_{i \in \{1,2,\ldots,K_{\text{sub}}\}} \|\mathbf{r}[s-1] - \mathbf{C}_{p,s}\mathbf{e}_i\|_2^2$$

$i_p[s]$ refers to the codeword selected at level s. r[s - 1] refers to a residual latent vector at a stage s-1. In some cases, Equation 6 may be modified as Equation 7.

[Equation 7]

$$\hat{\mathbf{q}}_s = \arg\min_{\mathbf{q}_s \in \mathcal{C}_s} \|\mathbf{r}_{s-1} - \mathbf{q}_s\|_2^2$$

Here, $\hat{q}_s$ is a codeword selected based on the codebook $C_s$.

In operation S103, the multi-stage vector quantizers 220_1 to 220_s may each cause a codeword index of the selected codeword to be included the codeword index set. Operation S103 may be represented by Equation 8.

[Equation 8]

$$\mathcal{J}_p[s] = \mathcal{J}_p[s-1] \cup i_p[s]$$

$\mathcal{J}_p$ [s] refers to a codeword index at the stage s. $\mathcal{J}_p$ [s - 1] refers to a codeword index at the stage s - 1.

[Equation 9]

$$\mathcal{Q}_{\mathcal{C}}^{s} = \mathcal{Q}_{\mathcal{C}}^{s-1} \cup \{\hat{\mathbf{q}}_s\}$$

$\mathcal{Q}_{\mathcal{C}}^{s}$ is a set of selected codewords. The set of selected codewords may be updated as shown in Equation 10.

In operation S105, the multi-stage vector quantizers 220_1 to 220_s may update the latent vector quantized to level s. The update process may be represented by Equation 10.

[Equation 10]

$$\bar{\mathbf{z}}_p\left[s\right] = \bar{\mathbf{z}}_p\left[s-1\right] + \mathbf{C}_{p,s}\mathbf{e}_{i_p[s]}$$

In case, the sub-vectors are not partitioned, Equation 10 may be modified to Equation 11.

[Equation 11]

$$\bar{\mathbf{z}}_s = \bar{\mathbf{z}}_{s-1} + \hat{\mathbf{q}}_s$$

In operation S107, each of the multi-stage vector quantizers 220_1 to 220_s may update the residual latent vector which may be expressed as Equation 12.

[Equation 12]

$$\mathbf{r}\left[s\right] = \mathbf{z}_p - \bar{\mathbf{z}}_p\left[s\right]$$

In case the sub-vectors are not partitioned, Equation 12 may be modified to Equation 13.

[Equation 13]

$$\mathbf{r}_s = \mathbf{z} - \bar{\mathbf{z}}_s$$

The codebook may be identical or different depending on a partition and a level. In cases when the codebook is identical, efficiency may improve.

When operations S101 to S107 described herein are performed on each of ρ partitioned sub-vectors, a corresponding ρ codeword index sets are determined. The p codeword index sets may be concatenated and may be transmitted via a feedback channel after channel coding is performed. A bitstream generated by the concatenation of the p codeword index sets may be represented by Expression 14.

[Expression 14]

$$\mathcal{J}_1\left[\bar{s}\right] \oplus \mathcal{J}_2\left[\bar{s}\right] \oplus \cdots \oplus \mathcal{J}_P\left[\bar{s}\right]$$

Referring again to FIG. 5A, the decoder 310 may receive the updated residual latent vector. The decoder 310 may estimate channel information from the updated residual latent vector based on a second machine learning model (using Expression 15). The wireless communication device 300 may use the estimated channel information to optimize a communication system.

[Expression 15]

$$g_{\theta^{\bar{s}}}: \bar{z}_S \rightarrow \widehat{H}$$

The decoder 310 may be parametrized as 0.

The encoder 210 and the decoder 310 may determine a single set of a model and a codebook through training, wherein the single set may support multiple compression ratios.

According to an embodiment, the encoder 210 and the decoder 310 may perform one-shot training. As used herein, the one-shot training means that the encoder 210 and the decoder 310 may be trained to combine the first machine learning model, the second machine learning model, and the codebook to adjust the compression ratio of the feedback information according to overhead of the feedback link. A loss function of the one-shot training may be represented by Equation 16.

[Equation 16]

$$\mathcal{L}_{\text{One-shot}} = \sum_{\bar{s}} w_{\bar{s}} \mathcal{L}_{\bar{s}} \left( \phi^{\text{U}}, \theta^{\text{U}}, \left\{ \mathbf{C}_s^{\text{U}} \right\}_{s=1}^{\bar{s}} \right)$$

The importance of each of the multiple compression ratios may be based on (or controlled by) a weight w. $\phi, \theta$. and

$$\mathcal{C} = \cup_{s=1}^{S} \mathcal{C}_s$$

may be generally used to compress channels having different feedback speeds. $\phi^{\text{U}}, \theta^{\text{U}}$, and

$$\left\{ \mathbf{C}_s^{\text{U}} \right\}_{s=1}^{\bar{s}}$$

are universally used to compress channels with different feedback rates.

The loss function of each compression ratio may be represented by Equation 17.

[Equation 17]

$$\mathcal{L}(\phi, \theta, \mathcal{C}) = \|\mathbf{H} - g_\theta(Q_{\mathcal{C}}(f_\phi(\mathbf{H})))\|_F^2$$
$$+ \lambda \|f_\phi(\mathbf{H}) - \text{sg}[Q_{\mathcal{C}}(f_\phi(\mathbf{H}))]\|_2^2$$
$$+ \|\text{sg}[f_\phi(\mathbf{H})] - Q_{\mathcal{C}}(f_\phi(\mathbf{H}))\|_2^2$$

Here, sg is a stop gradient operator. In Equation 17, the first term represents a reconstruction loss for training a pair of the encoder 210 and the decoder 310. The second term refers to a regularizer for an output of the encoder 210 to converge at the closest codeword. Here, $\lambda$ is a regularization rate. The third term is used to train the codeword closest to the output of the encoder 210 under the $\mathcal{L}_2$-norm distance measurement. A stop gradient sg[·] may be an identity function in a forward pass and may be set to 0 in a backward pass.

Additionally, Equation 17 may be represented by Equation 18.

[Equation 18]

$$\mathcal{L}_{\bar{s}} \left( \phi^{\bar{s}}, \theta^{\bar{s}}, \left\{ \mathbf{C}_s^{\bar{s}} \right\}_{s=1}^{\bar{s}} \right) = \left\| \mathbf{H}_s - g_{\theta^{\bar{s}}} \left( Q_{\bar{s}}^{\text{MS}} \left( f_{\phi^{\bar{s}}} \left( \mathbf{H}_s \right) \right) \right) \right\|_F^2$$
$$+ \lambda \| \text{sg} \left[ \bar{\mathbf{z}}_{\bar{s}} \right] - f_{\phi^{\bar{s}}} \left( \mathbf{H}_s \right) \|_2^2 + \sum_p \left\| \text{sg} \left[ \mathbf{z}_p \right] - \sum_s \mathbf{C}_s^{\bar{s}} \mathbf{e}_{i_p[s]} \right\|_2^2$$

In Equation 18, the first term is used to update the encoder 210, the decoder 310, and the codebook such that errors in channel information restoration are minimized. The second term is used to update the encoder 210 such that errors between the output of the encoder 210 and the quantized latent vector are minimized. The third term is used to update codewords of the codebook such that the errors between the output of the encoder 210 and the quantized latent vector are minimized.

$\phi_{\bar{s}}$ and $\theta_{\bar{s}}$ are parameters of the encoder 210 and the decoder 310 for optimizing compression at the stage $\bar{s}$,

$$\mathcal{C}^{\bar{s}} = \cup_{s=1}^{\bar{s}} C_s^{\bar{s}}$$

respectively. is a multi-stage codebook corresponding to up to the stage $\bar{s}$.

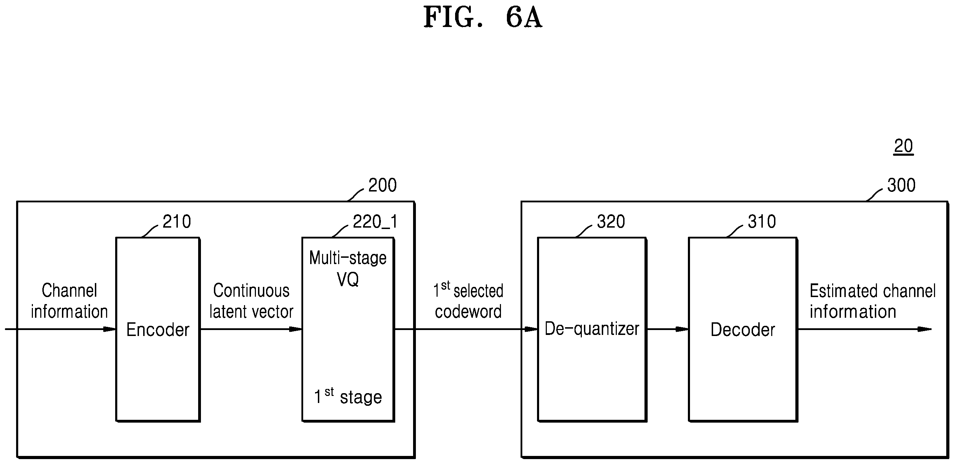

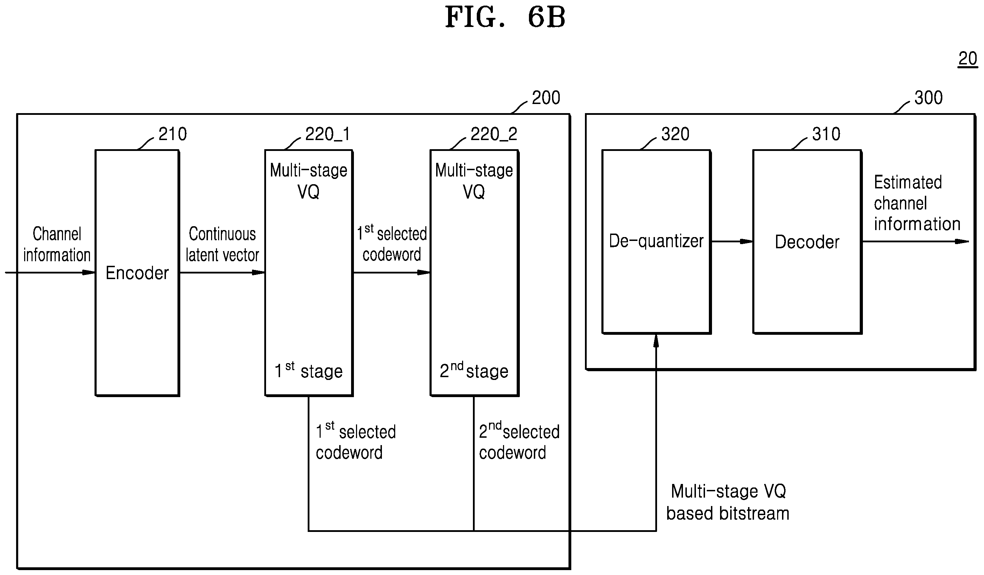

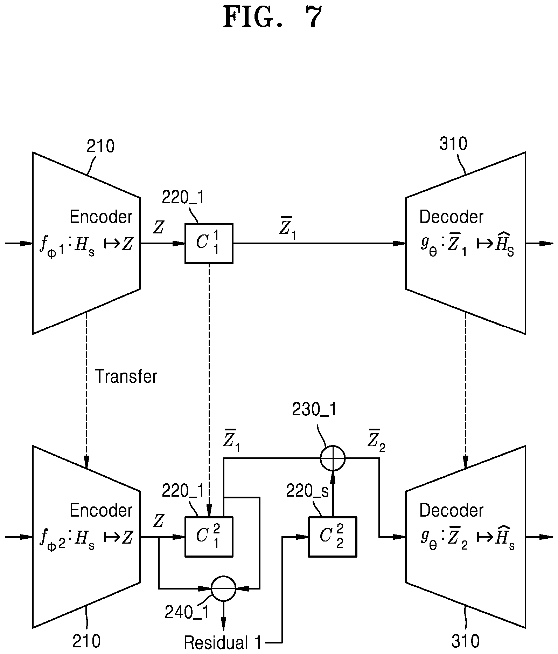

According to an embodiment, the encoder 210 and the decoder 310 may perform sequential training. Further details regarding the sequential training process are described with reference to FIGS. 6A, 6B, and 7.

A p-th segment of the quantized latent vector may be decoded in one of the base station 120, the wireless communication device 300, and the decoder 310. A first phase of decoding may be represented by Equation 19. The decoding may include a de-quantization process. The de-quantizer 320 may perform an operation according to Equation 19.

[Equation 19]

$$\bar{\mathbf{z}}_{\bar{s}}[p] = \sum_{s=1}^{\bar{s}} \hat{\mathbf{q}}_s[p]$$

Additionally, a complete quantized latent vector may be reconstructed by Equation 20.

[Equation 20]

$$\bar{\mathbf{z}}_{\bar{s}} = [\bar{\mathbf{z}}_{\bar{s}}^T[1], \bar{\mathbf{z}}_{\bar{s}}^T[2], \ldots, \bar{\mathbf{z}}_{\bar{s}}^T[P]]^T$$

The reconstructed quantized latent vector may be input to the decoder 310. Additionally, the decoder 310 may reconstruct the channel state information.

FIGS. 6A and 6B each illustrate sequential training of wireless communication devices, according to an embodiment.

As used herein, the sequential training refers to a training method in which training is performed while sequentially (i.e., one-by-one) adding vector quantization stages. Additionally, the sequential training is a training method in which a previous training result is transferred to a next stage and training is performed by using (e.g., intactly using) the previous training result in the next stage. The sequential training may reduce (e.g., avoid) task-specific learning based on adopting transfer learning. Additionally, the sequential training may extract and efficiently apply useful prior knowledge to a subsequent training process.

In case of transfer learning, the wireless communication device 200 first generates pre-trained parameters in a previous stage. Subsequently, the wireless communication device 200 may update the pre-trained parameters in a current stage. The generation and updating of the parameters may be repeated for each stage. Descriptions regarding generation and updating of the parameters are provided based on an example with reference to FIGs. 6A and 6B.

FIGS. 6A and 6B illustrate a portion of a sequential training process. FIG. 6A illustrates training in a first stage and FIG. 6B illustrates training in a second stage (i.e., when the stage extends to a second stage). The wireless communication device 200 and the wireless communication device 300 may perform training by performing the operations described with reference to FIGS. 2 and 3.

Referring to FIG. 6A, the first machine learning model of the encoder 210 and the second machine learning model of the decoder 310 may be performed training when the multi-stage vector quantization level is 1. Thus, parameters of the first machine learning model of the encoder 210, parameters of the second machine learning model of the decoder 310, and a codebook may be updated.

Referring to FIG. 6B, the first machine learning model of the encoder 210 and the second machine learning model of the decoder 310 may perform training when the multi-stage vector quantization level is 2. Accordingly, the parameters and the codebook when the multi-stage vector quantization level is 1 may be optimized. Thus, the wireless communication device 200 may update the parameters in a next stage using the parameters for a previous stage.

FIG. 7 illustrates a sequential training process of wireless communication devices, according to an embodiment.

FIG. 7 may be described with reference to FIGS. 2 to 6B. Referring to FIG. 7, the wireless communication device 200 transfers knowledge from a pre-trained R1 model to an initialization phase of an R2-specific training stage.

Referring to FIG. 7, the wireless communication system 20 may include an encoder 210, a decoder 310, a concatenation unit 230_1, quantizers 220_1 and 220_2, and a residual unit 240_1.

FIG. 7 illustrates that a training result of a first stage is transferred to a second stage. Specifically, parameters of the encoder 210, parameters of the decoder 310, and a codebook, which are updated in the first stage, may be transferred to the second stage.

After performing transfer training for each compression task (e.g., transferring the parameters from the first stage to the second stage), the wireless communication device 200 may generate a universal model and a universal codebook based on a fine-tuning operation. In some cases, parameters for a stage s - 1 may be optimized to minimize a task-specific learning loss function $\mathcal{L}_{\bar{s}-1}$. Additionally, the pre-trained parameters may be used as initialization parameters of training in stage s.

According to an embodiment, the wireless communication device 200 and the wireless communication device 300 may perform initialization, such as $\phi^{\bar{s}} \leftarrow \phi^{\bar{s}-1}$, $\theta^{\bar{s}} \leftarrow \theta^{\bar{s}-1}$ and $\mathcal{C}_s^{\bar{s}-1} \leftarrow \mathcal{C}_s^{\bar{s}}$, for $1 \le s \le \bar{s}$. A sub-codebook $\mathcal{C}_s^{\bar{s}}$ may be introduced in the stage $\bar{s}$. and may be randomly initialized.

According to an embodiment, the wireless communication device 200 and the wireless communication device 300 may perform (e.g., along with informative initialization), $\bar{s}$-th training based on minimizing an objective function $\mathcal{L}_{\bar{s}}$ that may be used for optimizing the performance in the stage $\bar{s}$.

After performing transfer learning through each of the s stages, the parameters converge (e.g., become close) to optimum points for the target of the stage s. Therefore, fine-tuning may be performed on each of the compression tasks to optimize trade-off between general performance and task-specific performance after parameters of the machine learning models and the codebook are initialized as $\theta^S$, $\theta^S$, and $C^S$.

Each of the parameters may be fine-tuned based on weights, as shown in Equation 21.

[Equation 21]

$$\mathcal{L}_{\text{fine−tune}} = \mathcal{L}_{\text{joint}} + \beta \|\mathbf{H} - g_\theta(f_\phi(\mathbf{H}))\|_F^2$$

Here, $\mathcal{L}_{\text{Fine−tune}}$ is a loss function for fine-tuning. In Equation 21, the first term describes the training of various compression ratios and refers to a loss function for one-shot training. Additionally, a non-quantized reconstruction error may be included in Equation 21 when a weight $\beta \ge 0$. In some cases, the weight $\beta \ge 0$ may accelerate the learning of latent space candidates while preserving low-dimensional manifolds of channels. The second term in Equation 21 may be used to adjust the respective parameters of the encoder 210 and the decoder 310.

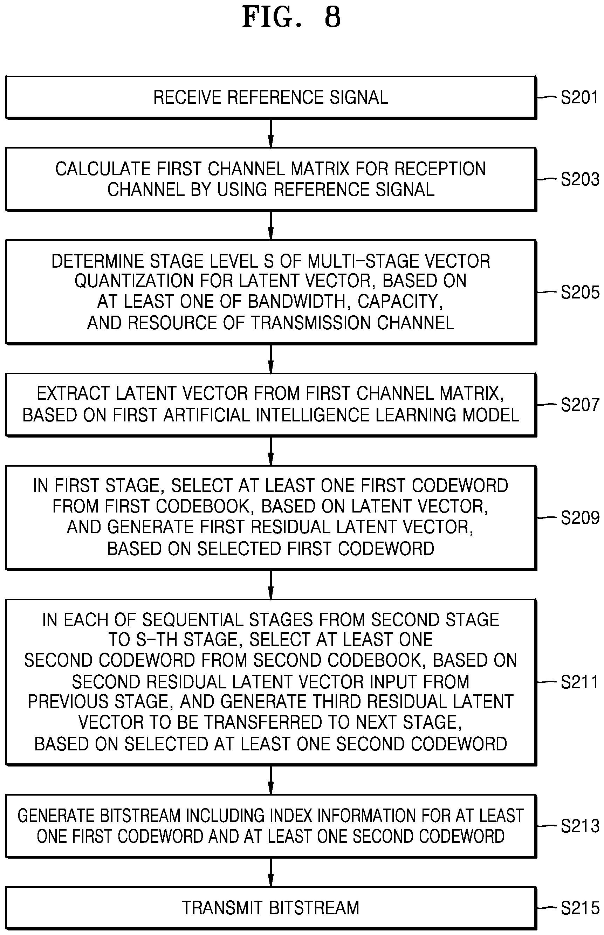

FIG. 8 illustrates a method of operating a wireless communication device, according to an embodiment.

Referring to FIG. 8, in operation S201, the wireless communication device 200 may receive a reference signal. In some examples, the wireless communication device 200 may receive a channel state information-reference signal (CSI-RS) from a base station.

In operation S203, the wireless communication device 200 may calculate a first channel matrix for a reception channel based on the reference signal (e.g., CSI-RS).

In operation S205, the wireless communication device 200 may determine a stage level s of multi-stage vector quantization process for a latent vector, based on at least one of a bandwidth, a capacity, and a resource of a transmission channel. In some cases, the wireless communication device 200 may determine a stage level of a multi-stage vector quantization process based on an uplink channel between the wireless communication device and the base station.

In operation S207, the wireless communication device 200 may extract the latent vector from the first channel matrix based on a first machine learning model. In some cases, a first machine learning model (such as first machine learning model described with reference to FIGs. 2-7) may extract a latent vector based on the first channel matrix.

In operation S209, the wireless communication device 200 may select a first codeword from a first codebook corresponding to a first stage and may generate a first residual latent vector based on the latent vector and the selected first codeword in the first stage of the multi-stage vector quantization process.

In operation S211, the wireless communication device 200 may, in a second stage corresponding to the determined stage level s of the multi-stage vector quantization process, select a second codeword from a second codebook corresponding to the second stage and generate a second residual latent vector based on the first residual latent vector and the selected second codeword.

In operation S213, the wireless communication device 200 may generate a bitstream based on the first codeword and the second codeword.

In operation S215, the wireless communication device 200 may transmit the bitstream. In some cases, the transmission is performed based on the base station using the uplink channel.

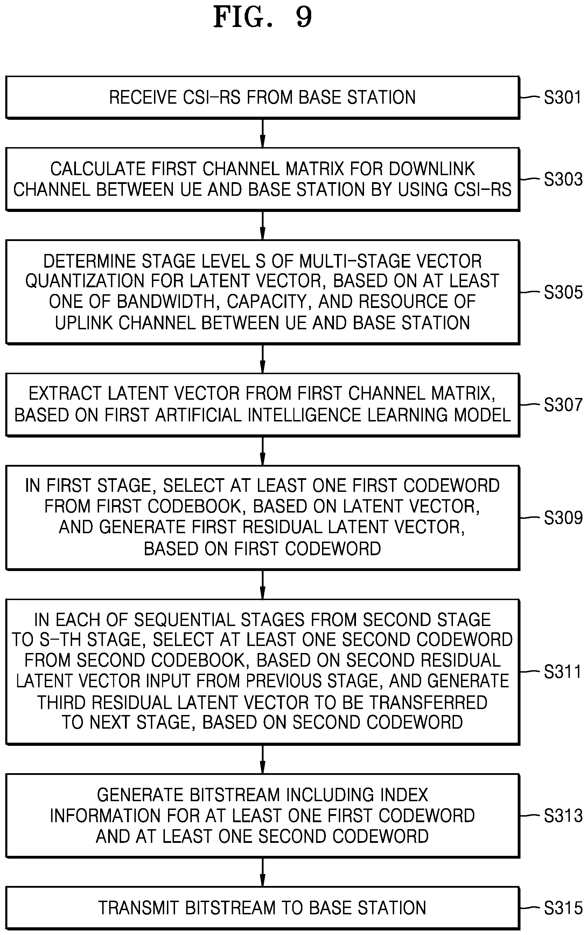

FIG. 9 illustrates a method of operating a UE, according to an embodiment.

FIG. 9 may be described with reference to FIG. 1. Further details regarding each of the operations are provided with reference to FIGs. 2-7. Referring to FIG. 9, in operation S301, the UE 120 may receive a CSI-RS from the base station 110.

In operation S303, the UE 120 may calculate a first channel matrix for a downlink channel between the UE 120 and the base station 110 based on the CSI-RS.

In operation S305, the UE 120 may determine a stage level s of multi-stage vector quantization for a latent vector based on at least one of a bandwidth, a capacity, and a resource of an uplink channel between the UE 120 and the base station 110. In some cases, the wireless communication device (i.e., UE 120) may determine a stage level of a multi-stage vector quantization process based on an uplink channel between the wireless communication device and the base station.

In operation S307, the UE 120 may extract the latent vector from the first channel matrix, based on a first machine learning model. In some cases, the first machine learning model may extract a latent vector based on the first channel matrix. According to an embodiment, the UE 120 may partition the latent vector into a plurality of sub-latent vectors and may generate the first residual latent vector based on the plurality of sub-latent vectors.

In operation S309, the UE 120 may, in a first stage of the multi-stage vector quantization process, select at least one first codeword from a first codebook corresponding to the first stage and generate a first residual latent vector based on the latent vector and the selected codeword.

In operation S311, the UE 120 may, in a second stage corresponding to the determined stage level s of the multi-stage vector quantization process, select at least one second codeword from a second codebook corresponding to the second stage and may generate a second residual latent vector based on the selected at least one second codeword and the first residual latent vector. According to an embodiment, the first codebook may be different from the second codebook. According to another embodiment, the first codebook may be identical to the second codebook.

In operation S313, the UE 120 may generate a bitstream based on the at least one first codeword and the at least one second codeword. For example, the bitstream including index information for the at least one first codeword and the at least one second codeword may be generated. According to an embodiment, the UE 120 may generate the bitstream by concatenating a first bitstream for the at least one first codeword and at least one second bitstream for the at least one second codeword.

In operation S315, the UE 120 may transmit the bitstream to the base station 110. In some cases, the UE 120 may transmit the bitstream using the uplink channel.

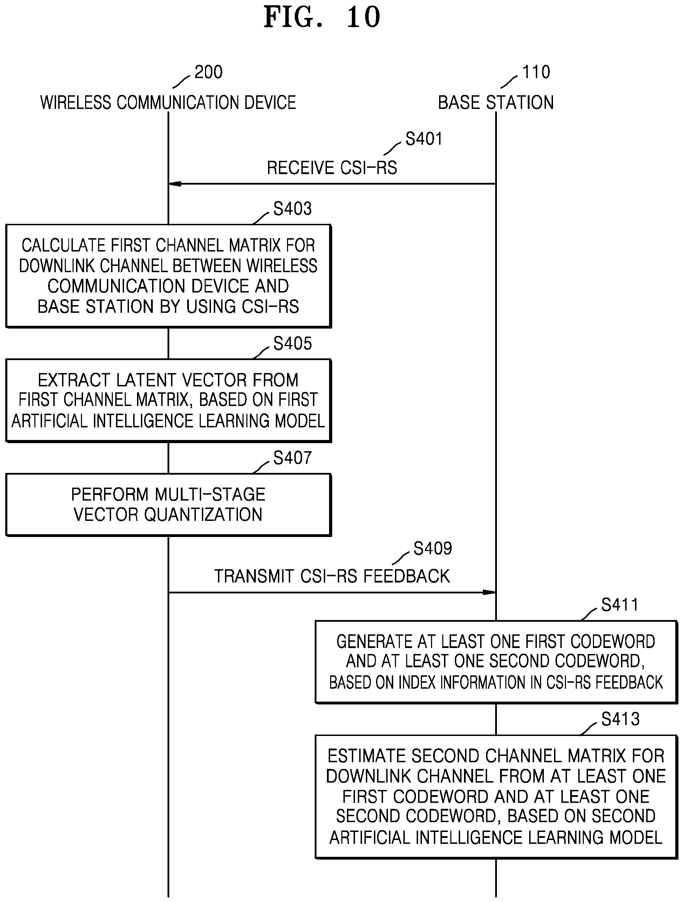

FIG. 10 illustrates a method of operating a wireless communication system including a UE and a base station, according to an embodiment.

FIG. 10 may be described with reference to FIGS. 8 and 9, and repeated descriptions may be omitted. The wireless communication device 300 may operate as a base station. The wireless communication system may include the wireless communication device 200 and the base station 110. Referring to FIG. 10, in operation S401, the wireless communication device 200 may receive a CSI-RS from the base station 110.

In operation S403, the wireless communication device 200 may calculate a first channel matrix for a downlink channel between the wireless communication device 200 and the base station 110 using the CSI-RS.

In operation S405, the wireless communication device 200 may extract a latent vector from the first channel matrix based on a first machine learning model.

In operation S407, the wireless communication device 200 may perform multi-stage vector quantization. The wireless communication device 200 may perform operations corresponding to operations S209, S211, and S213 of FIG. 8 as the multi-stage vector quantization process.

In operation S409, the wireless communication device 200 may transmit CSI-RS feedback to the base station 110. For example, the wireless communication device 200 may transmit a bitstream based on the multi-stage vector quantization to the base station 110.

In operation S411, the base station 110 may generate at least one first codeword and at least one second codeword based on index information in the CSI-RS feedback.

In operation S413, the base station 110 may estimate a second channel matrix for a downlink channel from the at least one first codeword and the at least one second codeword based on a second machine learning model.

The wireless communication device 200 and the base station 110 may perform one-shot training or sequential training based on repeating the operations described herein with reference to FIG. 10. According to an embodiment, the wireless communication device 200 may train a first machine learning model and the base station 110 may train a second machine learning model, according to quantization from a first stage to an s-th stage. In some cases, parameters of the first machine learning model and parameters of the second machine learning model may be updated and a first codebook and a second codebook may be updated (e.g., as the training progresses), such that the difference between the first channel matrix and the second channel matrix decreases and the difference between the latent vector and a quantized latent vector decreases, wherein the quantized latent vector may be based on the at least one first codeword and the at least one second codeword.

According to an embodiment, the wireless communication device 200 and the base station 110 may undergo sequential training in the first stage and the second stage in the stated order. Additionally, the parameters of the first machine learning model and the parameters of the second machine learning model may be updated and the first codebook and the second codebook may be updated (e.g., as the training progresses), such that the difference between the first channel matrix and the second channel matrix decreases and the difference between the latent vector and the quantized latent vector decreases, wherein the quantized latent vector may be based on the at least one first codeword and the at least one second codeword.

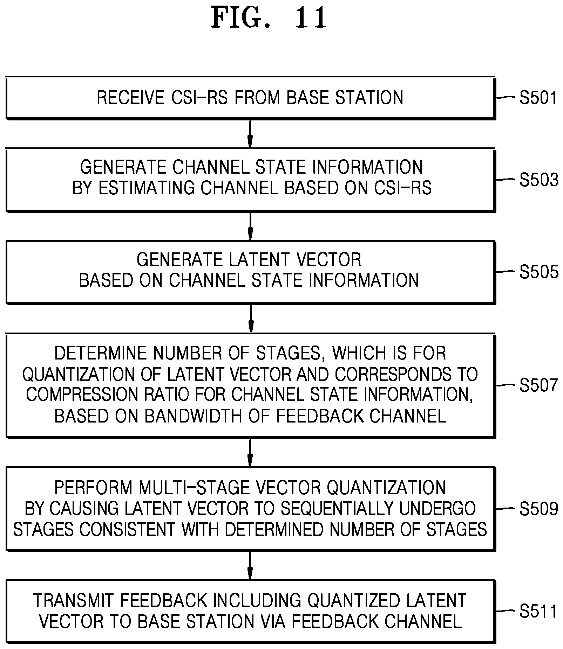

FIG. 11 illustrates a method of operating a wireless communication device, according to an embodiment.

FIG. 11 may be described with reference to FIGS. 1 to 4.

Referring to FIG. 11, in operation S501, the wireless communication device 200 may receive a CSI-RS from the base station 110.

In operation S503, the wireless communication device 200 may generate channel state information by estimating a channel based on the CSI-RS.

In operation S505, the wireless communication device 200 may generate a latent vector based on the channel state information.

In operation S507, the wireless communication device 200 may determine the number of stages for quantizing the latent vector. In some cases, the number of stages correspond to a compression ratio for the channel state information based on a bandwidth of a feedback channel. In some cases, the wireless communication device 200 may determine a number of stages for a multi-stage vector quantization process based on a feedback channel of the base station, wherein the number of stages corresponds to a compression ratio for the channel state information. In some cases, as the compression ratio decreases, the number of stages may increase. In some cases, as the bandwidth of the feedback channel increases, the number of stages may increase. In some cases, the wireless communication device 200 may determine the number of stages based on the state of the feedback channel.

In operation S509, the wireless communication device 200 may perform multi-stage vector quantization by ensuring the latent vector sequentially undergoes stages consistent with the determined number of stages. In each of the stages, the wireless communication device 200 may select a codeword closest to the latent vector from the same codebook. In some cases, the wireless communication device 200 may perform the multi-stage vector quantization process on the latent vector using the determined number of stages to obtain a quantized latent vector.

In operation S511, the wireless communication device 200 may transmit feedback including the quantized latent vector via the feedback channel to the base station 110. For example, the wireless communication device 200 may transmit the quantized latent vector to the base station using the feedback channel.

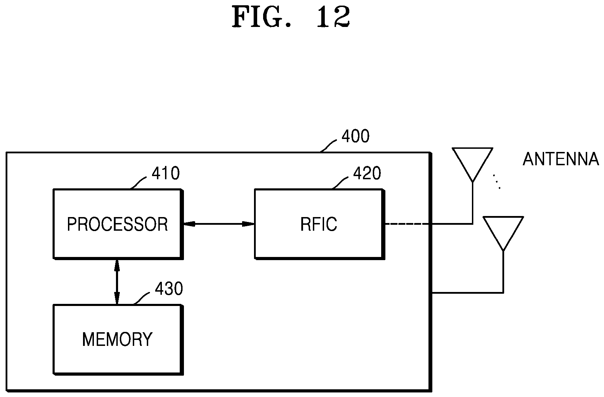

FIG. 12 illustrates a block diagram of a UE, according to an embodiment.

Referring to FIG. 12, a wireless communication device 400 may include a processor 410, an RFIC 420, and a memory 430. Although one processor 410, one RFIC 420, and one memory 430 are illustrated for convenience of description, each of the processor 410, the RFIC 420, and the memory 430 may be provided in plural and may not be limited to the example set forth in FIG. 12. The processor 410 may control the RFIC 420 and the memory 430 and may be configured to implement an operation method and operation flowcharts of the wireless communication device 400 according to the present disclosure.

The wireless communication device 400 may include a plurality of antennas and the RFIC 420 may transmit and receive radio signals via one or more antennas. At least some of the plurality of antennas may each correspond to a transmission antenna. The transmission antenna may transmit a radio signal to an external device (for example, another UE or another base station) rather than to the wireless communication device 400. The remaining antennas from among the plurality of antennas may each correspond to a reception antenna. The reception antenna may receive a radio signal from the external device.

According to an embodiment, the wireless communication device 400 may include the RFIC 420 and at least one processor 410. The at least one processor 410 may receive a CSI-RS from a base station via the RFIC 420. The at least one processor 410 may calculate a first channel matrix for a downlink channel between the wireless communication device 400 and the base station using the CSI-RS. The at least one processor 410 may determine a stage level s (where s is a positive integer) of multi-stage vector quantization for a latent vector based on at least one of a bandwidth, a capacity, and a resource of an uplink channel between the wireless communication device 400 and the base station.

In some cases, the stage level s of the multi-stage vector quantization may increase as at least one of the bandwidth, the capacity, and the resource of the uplink channel increases. The at least one processor 410 may extract the latent vector from the first channel matrix based on a first machine learning model. In a first stage, the at least one processor 410 may select at least one first codeword from a first codebook based on the latent vector and may generate a first residual latent vector based on the selected first codeword. In each of sequential stages from a second stage to an s-th stage, the at least one processor 410 may select at least one codeword of a current stage from a codebook corresponding to a current stage based on a residual latent vector of a previous stage input from the previous stage. Additionally, the at least one processor 410 may generate a residual latent vector of the current stage to be transferred to a next stage based on the selected at least one codeword of the current stage.

Additionally, the at least one processor 410 may generate a bitstream including index information for the at least one first codeword and the at least one second codeword. The at least one processor 410 may be configured to transmit the bitstream to the base station via the RFIC 420. The first codebook may be identical to the second codebook. The at least one processor 410 may generate the bitstream by concatenating a first bitstream for the at least one first codeword and at least one second bitstream for the at least one second codeword. In some cases, the size of the bitstream may increase as at least one of the bandwidth, the capacity, and the resource of the uplink channel increases. The at least one processor 410 may be configured to partition the latent vector into a plurality of sub-latent vectors. The at least one processor 410 may perform the generation of the first residual latent vector and the generation of the third residual latent vector on a sub-latent vector basis.

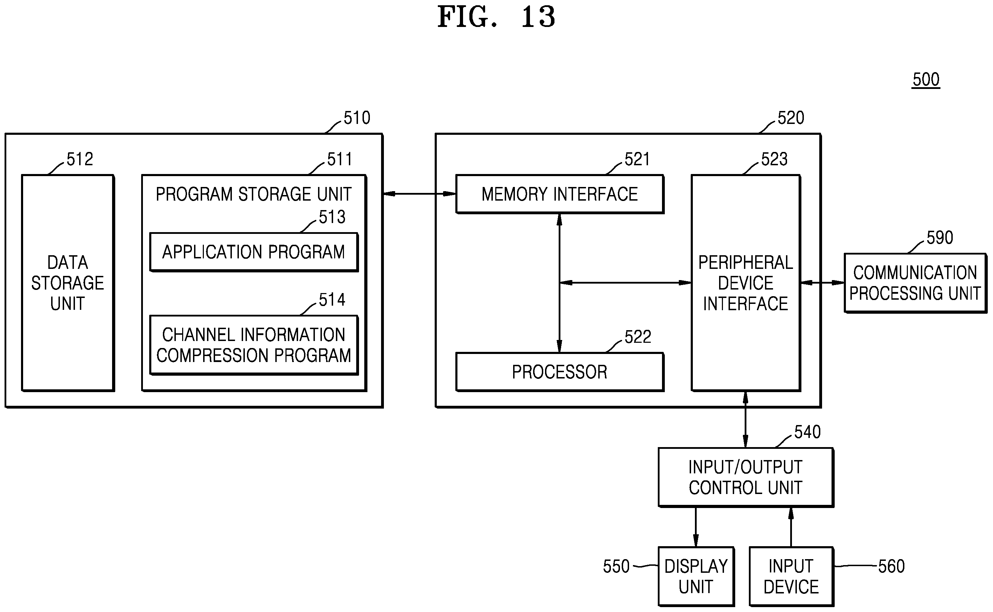

FIG. 13 is a block diagram illustrating an electronic device according to an embodiment.

Referring to FIG. 13, an electronic device 500 may include a memory 510, a processor unit 520, an input/output control unit 540, a display unit 550, an input device 560, and a communication processing unit 590. Here, the memory 1010 may be provided in a plural number. Descriptions of the respective components may be made as follows.

The memory 510 may include a program storage unit 511 storing a program for controlling operations of the electronic device 500 and a data storage unit 512 storing data generated during the execution of the program. The data storage unit 512 may store data required for operations of an application program 513 and a channel information compression program 514. The program storage unit 511 may include the application program 513 and the channel information compression program 514. Here, the program in the program storage unit 511 is a set of instructions and may be referred to as an instruction set. The application program 513 includes an application program operating on the electronic device 500. That is, the application program 513 may include instructions of an application driven by a processor 522. The channel information compression program 514 may include a program for compressing channel state information (e.g., as described with reference to FIGS. 1 to 12).

A peripheral device interface 523 may control connections between an input/output peripheral device of a base station and each of the processor 522 and a memory interface 521. By using at least one software program, the processor 522 enables the base station to provide a service corresponding to the software program. Here, by executing at least one program stored in the memory 510, the processor 522 may provide a service corresponding to the program.

The input/output control unit 540 may provide an interface between input/output devices, such as the display unit 550 and the input device 560, and the peripheral device interface 523. The display unit 550 displays station information, input characters, moving pictures, still pictures, and the like. For example, the display unit 550 may display application information regarding applications driven by the processor 522.

The input device 560 may provide input data generated through selection by the electronic device 500 to the processor unit 520 via the input/output control unit 540. Here, the input device 560 may include a keypad including at least one hardware button, a touchpad for sensing touch information, and the like. For example, the input device 560 may provide the touch information, such as a touch, a touch motion, or a touch release, which is sensed by the touchpad, to the processor 522 via the input/output control unit 540. The electronic device 500 may include the communication processing unit 590 configured to perform a communication function for speech communication and data communication.

The processes discussed above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be examples and not limiting. Only the claims that follow are meant to set bounds as to what the present invention includes. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted, the systems and/or methods described above may be applied to, or used in accordance with, other systems and/or methods

While the inventive concept has been particularly shown and described with reference to embodiments thereof, it will be understood that various changes in form and details may be made therein without departing from the scope of the following claims.

**Claims**

1. A method of operating a wireless communication device, the method comprising:

receiving a channel state information-reference signal (CSI-RS) from a base station;

calculating a first channel matrix for a downlink channel between the wireless communication device and the base station based on the CSI-RS;

determining a stage level of a multi-stage vector quantization process based on an uplink channel between the wireless communication device and the base station;

extracting, using a first machine learning model, a latent vector based on the first channel matrix;

generating, in a first stage of the multi-stage vector quantization process, a first residual latent vector based on the latent vector, wherein the first residual latent vector is based on a first codeword selected from a first codebook corresponding to the first stage;

generating, in a second stage corresponding to the determined stage level of the multi-stage vector quantization process, a second residual latent vector based on the first residual latent vector, wherein the second residual latent vector is based on a second codeword selected from a second codebook corresponding to the second stage;

generating a bitstream based on the first codeword and the second codeword; and

transmitting the bitstream to the base station using the uplink channel.

2. The method of claim 1 or 2, wherein generating the second residual latent vector comprises:
iteratively computing a plurality of residual latent vectors corresponding to a plurality of sequential stages from the first stage to the second stage.

3. The method of any preceding claim, wherein generating of the bitstream further comprises:
concatenating a first bitstream corresponding to the first codeword and a second bitstream corresponding to the second codeword.

4. The method of any preceding claim, wherein the stage level of the multi-stage vector quantization process is determined based on at least one of a bandwidth, a capacity, and a resource of the uplink channel.

5. The method of any preceding claim, wherein a size of the bitstream is determined based on at least one of a bandwidth, a capacity, and a resource of the uplink channel.

6. The method of any preceding claim, further comprising:
partitioning the latent vector into a plurality of sub-latent vectors, wherein the first residual latent vector is generated based on the plurality of sub-latent vectors.

7. A method of operating a system, the method comprising:

receiving, by a wireless communication device, a channel state information-reference signal (CSI-RS) from a base station;

calculating, by the wireless communication device, a channel matrix for a downlink channel between the wireless communication device and the base station based on the CSI-RS;

determining, by the wireless communication device, a stage level of a multi-stage vector quantization process based on an uplink channel between the wireless communication device and the base station;

extracting, using a first machine learning model of the wireless communication device, a latent vector based on a first channel matrix;

generating, in a first stage of the multi-stage vector quantization process, a first residual latent vector based on the latent vector, wherein the first residual latent vector is based on a first codeword selected from a first codebook corresponding to the first stage;

generating, in a second stage corresponding to the determined stage level of the multi-stage vector quantization process, a second residual latent vector based on a second codeword selected from a second codebook corresponding to the second stage;

generating, by the wireless communication device, a bitstream based on the first codeword and the second codeword;

transmitting, by the wireless communication device, the bitstream to the base station using the uplink channel;

receiving, by the base station, the bitstream;

generating, by the base station, the first codeword and the second codeword based on the bitstream; and

estimating, by the base station, a second channel matrix for the downlink channel from the first codeword and the second codeword based on a second machine learning model.

8. The method of claim 7, wherein generating the second residual latent vector comprises:
iteratively computing a plurality of residual latent vectors corresponding to a plurality of sequential stages from the first stage to the second stage.

9. The method of claim 7 or 8, wherein generating the bitstream further comprises:
concatenating a first bitstream corresponding to the first codeword and a second bitstream corresponding to the second codeword.

10. The method of any of claims 7 to 9, wherein the stage level of the multi-stage vector quantization process is determined based on at least one of a bandwidth, a capacity, and a resource of the uplink channel.

11. The method of any of claims 7 to 10, wherein a size of the bitstream is determined based on at least one of a bandwidth, a capacity, and a resource of the uplink channel.

12. The method of any of claims 7 to 11, further comprising:
partitioning, by the wireless communication device, the latent vector into a plurality of sub-latent vectors, wherein the first residual latent vector is generated based on the plurality of sub-latent vectors.

13. The method of any of claims 7 to 12, wherein the first machine learning model and the second machine learning model comprise an encoder and a decoder of a combined machine learning model, respectively.

14. The method of any of claims 7 to 13, further comprising:
training the first machine learning model and the second machine learning model by computing a loss function and updating a parameter of the first machine learning model, a parameter of the second machine learning model, the first codebook, and the second codebook based on the loss function.

15. The method of any of claims 7 to 14, further comprising:
training the first machine learning model by performing sequential training in a plurality of training phases corresponding to a plurality of training stages of the multi-stage vector quantization process.

# FIG. 1

110

10

TRANSMISSION OF CSI-RS

TRANSMISSION OF CSI-RS FEEDBACK
BASED ON MULTI-STAGE VECTOR QUANTIZATION

120

# FIG. 2

200

Channel information → Encoder (210) → Continuous latent vector → Multi-Stage Vector Quantizer (220) → bitstream

# FIG. 3

200

Channel information → Encoder (210) → Continuous latent vector → Multi-stage VQ (220_1) 1st stage → 1st residual latent vector → Multi-stage VQ (220_2) 2nd stage → 2nd residual latent vector → Multi-stage VQ (220_3) 3rd stage → (s−1)th residual latent vector → Multi-stage VQ (220_S) Sth stage →

1st selected codewords, 2nd selected codewords, 3rd selected codewords, Sth selected codewords → Multi-stage VQ based bitstream

EP 4 550 686 A1

# FIG. 4

300

Multi-stage VQ
based bitstream

320
De-quantizer

310
Decoder

Channel
information

# FIG. 5A

# FIG. 5B

| SELECT CODEWORD CLOSEST TO RESIDUAL LATENT VECTOR BY USING CODEBOOK AT LEVEL S | — S101 |
| INCLUDE SELECTED CODEWORD INDEX IN CODEWORD INDEX SET | — S103 |
| UPDATE LATENT VECTOR QUANTIZED UNTIL LEVEL S | — S105 |
| UPDATE RESIDUAL LATENT VECTOR | — S107 |

# FIG. 6A

Channel information → Encoder (210) → Continuous latent vector → Multi-stage VQ (220_1) 1st stage → 1st selected codeword → De-quantizer (320) → Decoder (310) → Estimated channel information

200

300

20

EP 4 550 686 A1

# FIG. 6B

# FIG. 7

# FIG. 8

| | |
|---|---|
| RECEIVE REFERENCE SIGNAL | S201 |

↓

| | |
|---|---|
| CALCULATE FIRST CHANNEL MATRIX FOR RECEPTION CHANNEL BY USING REFERENCE SIGNAL | S203 |

↓

| | |
|---|---|
| DETERMINE STAGE LEVEL S OF MULTI-STAGE VECTOR QUANTIZATION FOR LATENT VECTOR, BASED ON AT LEAST ONE OF BANDWIDTH, CAPACITY, AND RESOURCE OF TRANSMISSION CHANNEL | S205 |

↓

| | |
|---|---|
| EXTRACT LATENT VECTOR FROM FIRST CHANNEL MATRIX, BASED ON FIRST ARTIFICIAL INTELLIGENCE LEARNING MODEL | S207 |

↓

| | |
|---|---|
| IN FIRST STAGE, SELECT AT LEAST ONE FIRST CODEWORD FROM FIRST CODEBOOK, BASED ON LATENT VECTOR, AND GENERATE FIRST RESIDUAL LATENT VECTOR, BASED ON SELECTED FIRST CODEWORD | S209 |

↓

| | |
|---|---|
| IN EACH OF SEQUENTIAL STAGES FROM SECOND STAGE TO S-TH STAGE, SELECT AT LEAST ONE SECOND CODEWORD FROM SECOND CODEBOOK, BASED ON SECOND RESIDUAL LATENT VECTOR INPUT FROM PREVIOUS STAGE, AND GENERATE THIRD RESIDUAL LATENT VECTOR TO BE TRANSFERRED TO NEXT STAGE, BASED ON SELECTED AT LEAST ONE SECOND CODEWORD | S211 |

↓

| | |
|---|---|
| GENERATE BITSTREAM INCLUDING INDEX INFORMATION FOR AT LEAST ONE FIRST CODEWORD AND AT LEAST ONE SECOND CODEWORD | S213 |

↓

| | |
|---|---|
| TRANSMIT BITSTREAM | S215 |

# FIG. 9

| | |
|---|---|
| RECEIVE CSI-RS FROM BASE STATION | S301 |

↓

| | |
|---|---|
| CALCULATE FIRST CHANNEL MATRIX FOR DOWNLINK CHANNEL BETWEEN UE AND BASE STATION BY USING CSI-RS | S303 |

↓

| | |
|---|---|
| DETERMINE STAGE LEVEL S OF MULTI-STAGE VECTOR QUANTIZATION FOR LATENT VECTOR, BASED ON AT LEAST ONE OF BANDWIDTH, CAPACITY, AND RESOURCE OF UPLINK CHANNEL BETWEEN UE AND BASE STATION | S305 |

↓

| | |
|---|---|
| EXTRACT LATENT VECTOR FROM FIRST CHANNEL MATRIX, BASED ON FIRST ARTIFICIAL INTELLIGENCE LEARNING MODEL | S307 |

↓

| | |
|---|---|
| IN FIRST STAGE, SELECT AT LEAST ONE FIRST CODEWORD FROM FIRST CODEBOOK, BASED ON LATENT VECTOR, AND GENERATE FIRST RESIDUAL LATENT VECTOR, BASED ON FIRST CODEWORD | S309 |

↓

| | |
|---|---|
| IN EACH OF SEQUENTIAL STAGES FROM SECOND STAGE TO S-TH STAGE, SELECT AT LEAST ONE SECOND CODEWORD FROM SECOND CODEBOOK, BASED ON SECOND RESIDUAL LATENT VECTOR INPUT FROM PREVIOUS STAGE, AND GENERATE THIRD RESIDUAL LATENT VECTOR TO BE TRANSFERRED TO NEXT STAGE, BASED ON SECOND CODEWORD | S311 |

↓

| | |
|---|---|
| GENERATE BITSTREAM INCLUDING INDEX INFORMATION FOR AT LEAST ONE FIRST CODEWORD AND AT LEAST ONE SECOND CODEWORD | S313 |

↓

| | |
|---|---|
| TRANSMIT BITSTREAM TO BASE STATION | S315 |

# FIG. 10

# FIG. 11

| RECEIVE CSI-RS FROM BASE STATION | — S501 |

↓

| GENERATE CHANNEL STATE INFORMATION BY ESTIMATING CHANNEL BASED ON CSI-RS | — S503 |

↓

| GENERATE LATENT VECTOR BASED ON CHANNEL STATE INFORMATION | — S505 |

↓

| DETERMINE NUMBER OF STAGES, WHICH IS FOR QUANTIZATION OF LATENT VECTOR AND CORRESPONDS TO COMPRESSION RATIO FOR CHANNEL STATE INFORMATION, BASED ON BANDWIDTH OF FEEDBACK CHANNEL | — S507 |

↓

| PERFORM MULTI-STAGE VECTOR QUANTIZATION BY CAUSING LATENT VECTOR TO SEQUENTIALLY UNDERGO STAGES CONSISTENT WITH DETERMINED NUMBER OF STAGES | — S509 |

↓

| TRANSMIT FEEDBACK INCLUDING QUANTIZED LATENT VECTOR TO BASE STATION VIA FEEDBACK CHANNEL | — S511 |

# FIG. 12

# FIG. 13

Europäisches
Patentamt

European
Patent Office

Office européen
des brevets

# EUROPEAN SEARCH REPORT

**Application Number**

EP 24 20 8842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIAJIA GUO ET AL: "Overview of Deep Learning-based CSI Feedback in Massive MIMO Systems", ARXIV.ORG, CORNELL UNIVERSITY LIBRARY, 201 OLIN LIBRARY CORNELL UNIVERSITY ITHACA, NY 14853, 29 June 2022 (2022-06-29), XP091259544, * figures 1, 3 * * section II-B * * page 2 * | 1-15 | INV. H04B7/06 H04L25/02 |
| Y | US 2023/019128 A1 (ZEGHIDOUR NEIL [FR] ET AL) 19 January 2023 (2023-01-19) * paragraphs [0010], [0012], [0014], [0026], [0031] - [0041] * | 1-15 | |
| X,P | LEE JUNHO ET AL: "Learning Variable-Rate CSI Compression with Multi-Stage Vector Quantization", ICC 2024 - IEEE INTERNATIONAL CONFERENCE ON COMMUNICATIONS, IEEE, 9 June 2024 (2024-06-09), pages 5123-5128, XP034673177, DOI: 10.1109/ICC51166.2024.10622937 [retrieved on 2024-08-20] * the whole document * | 1-15 | |

**TECHNICAL FIELDS SEARCHED (IPC)**

H04B
H04L

The present search report has been drawn up for all claims

| Place of search | Date of completion of the search | Examiner |
|---|---|---|
| Munich | 7 March 2025 | Vucic, Jelena |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 8842

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2025

| Patent document cited in search report | Publication date | Patent family member(s) | | Publication date |
|---|---|---|---|---|
| US 2023019128 A1 | 19-01-2023 | EP | 4341932 A1 | 27-03-2024 |
| | | EP | 4425493 A2 | 04-09-2024 |
| | | JP | 2024527536 A | 25-07-2024 |
| | | KR | 20240022588 A | 20-02-2024 |
| | | US | 2023019128 A1 | 19-01-2023 |
| | | US | 2023186927 A1 | 15-06-2023 |
| | | US | 2024185870 A1 | 06-06-2024 |
| | | WO | 2023278889 A1 | 05-01-2023 |

For more details about this annex : see Official Journal of the European Patent Office, No. 12/82

EPO FORM P0459